# EUROPEAN PATENT SPECIFICATION

(11) **EP 2 692 617 B1**
(45) Date of publication and mention of the grant of the patent: **03.12.2014**
(21) Application number: 13178497.7
(22) Date of filing: 30.07.2013
(51) Int. Cl.: B62J 17/02, B62J 17/06, B62K 11/04

(54) **Saddle riding type vehicle**
Sattelfahrzeug
Véhicule de type à enfourcher

(30) Priority: 31.07.2012 JP 2012169246
(43) Date of publication of application: 05.02.2014
(73) Proprietor: Yamaha Hatsudoki Kabushiki Kaisha, Shizuoka-ken 438-8501 (JP)
(72) Inventor: Ichikawa, Toshikatsu, Shizuoka, 438-8501 (JP)
(74) Representative: Stöckeler, Ferdinand

(56) References cited:
- EP-A2- 0 248 619
- EP-A2- 1 759 970
- EP-A2- 2 077 220
- EP-A2- 2 394 893
- JP-A- H0 976 967
- US-A1- 2011 180 345

## Description

### BACKGROUND

### TECHNICAL FIELD

The present invention relates to saddle riding type vehicles and more specifically to a saddle riding type vehicle provided with a first side cowl and a second side cowl attached to the first side cowl in a plurality of attachment states.

### DESCRIPTION OF THE BACKGROUND ART

A motorcycle is an example of saddle riding type vehicle. Some motorcycles include side cowls.

Such a motorcycle including a side cowl is disclosed for example in JP-A 2007-62643 (Patent Document 1). The disclosed motorcycle includes a side cowling (first side cowl) as well as a side visor (second side cowl). The side visor is attached to the side cowling such that it can swing in the vehicle-widthwise direction.

The side visor is attached to the side cowling in a first or second position by changing the position to fasten a fixing bolt at an upper end. In the second position, the upper end of the side visor is further from the side cowling than in the first position.

Patent Document: JP-A 2007-62643

### SUMMARY

As disclosed by the patent document, if the attachment position of the side visor to the side cowling is changed by swinging the side visor in the vehicle-widthwise direction, a sufficient wind-shielding effect might not be obtained. This will be described more specifically. The wind-shielding effect with the side visor increases as the side visor is positioned closer to a rider. In the disclosure, the side visor is simply swung in the vehicle-widthwise direction, and therefore the distance between the side visor and the rider is substantially unchanged. If the side visor is attached in the second position, a sufficient wind-shielding effect may not be provided.

It is an object of the present invention to provide, in a saddle riding type vehicle provided with a first side cowl and a second side cowl attached to the first side cowl in a plurality of attachment states, to allow a wind-shielding effect by the second side cowl to be readily provided.

A saddle riding type vehicle according to the present invention includes a seat, a first side cowl, and a second side cowl. The first side cowl is provided ahead of the seat in a side view of the vehicle. The second side cowl is attached to a surface of the first side cowl through an attachment member. The second side cowl has a plurality of attachment states. The plurality of attachment states include a first attachment state and a second attachment state. In the second attachment state, the second side cowl is attached to the first side cowl behind a position corresponding to the first attachment state. A length of a rear end of the second side cowl projecting from a surface of the first side cowl in the vehicle-widthwise direction is larger in the second attachment state than in the first attachment state.

The saddle riding type vehicle according to the present invention allows the wind-shielding effect with the second side cowl to be easily obtained.

### BRIEF DESCRIPTION OF THE DRAWINGS

Fig. 1 is a left side view of a motorcycle according to an embodiment of the present invention.
Fig. 2 is a left side view of a first side cowl.
Fig. 3 is a left side view of the first side cowl showing a recess being enlarged.
Fig. 4 is a rear view of the first side cowl.
Fig. 5 is a view for illustrating a first engagement hole formed at a first engagement portion.
Fig. 6 is a view for illustrating a second engagement hole formed at a second engagement portion.
Fig. 7 is a sectional view taken along line VII-VII shown in Fig. 3.
Fig. 8 is a perspective view of an attachment portion as viewed from a back surface side of the first side cowl.
Fig. 9 is a left side view of a second side cowl.
Fig. 10 is a rear view of the second side cowl.
Fig. 11 is an enlarged view of an engagement portion formed at a back surface of the second side cowl.
Fig. 12 is a view for illustrating the second side cowl as view from the left side showing the attachment portion being enlarged.
Fig. 13 is a view for illustrating the second side cowl as viewed from the back showing the attachment portion being enlarged.
Fig. 14 is a perspective view of the first side cowl attached with the second side cowl as viewed from the back surface side.
Fig. 15 is a perspective view of the first engagement hole with which an engagement piece engages as viewed from the back side surface of the first side cowl.
Fig. 16 is a perspective view of the first engagement hole with which the engagement piece engages as viewed from the back side surface of the first side cowl in a different direction from Fig. 15.
Fig. 17 is a sectional view showing a state of how the engagement piece engages with the first engagement hole.
Fig. 18A is a view for illustrating a state of how a first contact portion in the engagement piece is positioned in the first engagement hole.
Fig. 18B is a view for illustrating a state of how a part of the first contact portion in the engagement piece is positioned between first and third guide surfaces formed at an inner peripheral surface of the first engagement hole.
Fig. 19 is a perspective view showing a state of how an attachment portion formed at the second side cowl is attached to an attachment portion formed at the first side cowl.
Fig. 20 is a perspective view of the state of how the attachment portion formed at the second side cowl is attached to the attachment portion formed at the first side cowl in a different direction from Fig. 19.
Fig. 21 is a side view showing a first attachment state of the second side cowl.
Fig. 22 is a plan view showing the first attachment state of the second side cowl.
Fig. 23 is a view for illustrating a state of how the contact member contacts an inner surface of a recess in the first attachment state.
Fig. 24 is a side view showing a second attachment state of the second side cowl.
Fig. 25 is a plan view showing the second attachment state of the second side cowl.
Fig. 26 is a view for illustrating the state of how the contact member contacts the inner surface of the recess in the second attachment state.

### DESCRIPTION OF THE EMBODIMENTS

Now, a saddle riding type vehicle according to an embodiment of the present invention will be described in conjunction with the accompanying drawings. A tourer type motorcycle (touring motorcycle) will be described as an example of the embodiment of the present invention. In the drawings, the same or corresponding portions are designated by the same reference characters and their description will not be repeated.

### Overall Structure

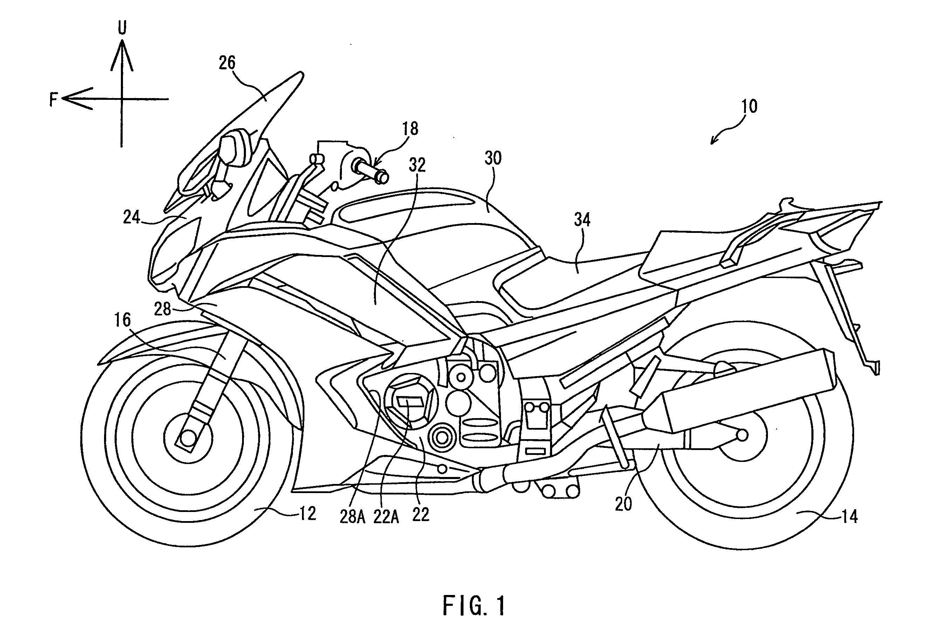

Fig. 1 is a left side view of a motorcycle 10 according to the embodiment of the present invention. In the following description, the front, back, left, and right refer to these directions as viewed from a rider seated on the seat 34 of the motorcycle 10. In Fig. 1, the arrow F indicates the forward direction of the motorcycle 10 and the arrow U indicates the upward direction of the motorcycle 10.

The motorcycle 10 includes a front wheel 12 and a rear wheel 14.

The front wheel 12 is supported rotatably by a pair of front suspensions 16. The front wheel 12 is rotated in a left-right direction as a handle 18 is operated.

The rear wheel 14 is supported rotatably by a rear arm 20 attached to a vehicle body frame. The rear wheel 14 is provided behind a power unit 22. Motive power transmitted from the power unit 22 rotates the rear wheel 14.

A front cowl 24 is provided in front of the handle 18. The front cowl 24 is provided with a wind screen 26.

A pair of first side cowls 28 on the left and right sides is provided behind and below the front cowl 24. The first side cowls 28 are attached to the vehicle body frame. The first side cowl 28 covers a front part of a fuel tank 30 in a side view of the vehicle. A second side cowl 32 is attached to a surface of the first side cowl 28.

In a side view of the vehicle, the seat 34 is provided behind the fuel tank 30. The seat 34 is positioned above the power unit 22. A rear end of the seat 34 is positioned above the rear wheel 14.

### First Side Cowl

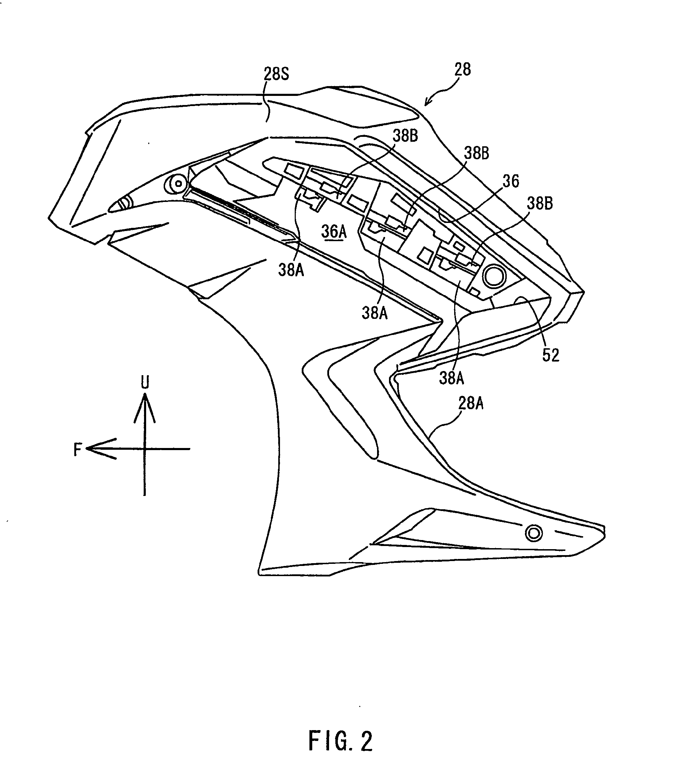

Referring to Fig. 2, the first side cowl 28 will be described. Since the pair of first side cowls 28 is symmetrically provided, the first side cowl 28 on the left side will be described, and the first side cowl 28 on the right side will not be described. In Fig. 2, the arrow F indicates the forward direction of the motorcycle 10 and the arrow U indicates the upward direction of the motorcycle 10.

The first side cowl 28 has a notch 28A. The notch 28A has a width increased from the front to the back in an up-down direction. As shown in Fig. 1, when the first side cowl 28 is attached to the vehicle body frame, a crankcase 22A of the power unit 22 is positioned in the notch 28A.

### Recess

The first side cowl 28 has a recess 36 above the notch 28A. The recess 36 has a shape and a size that allow the second side cowl 32 to be stored.

### Ventilation Hole

A ventilation hole 36A is formed at the recess 36. The ventilation hole 36A is formed through the first side cowl 28 in the vehicle-widthwise direction.

### Engagement Portion

A first engagement portion 38A and a second engagement portion 38B are formed in the recess 36 above the ventilation hole 36A.

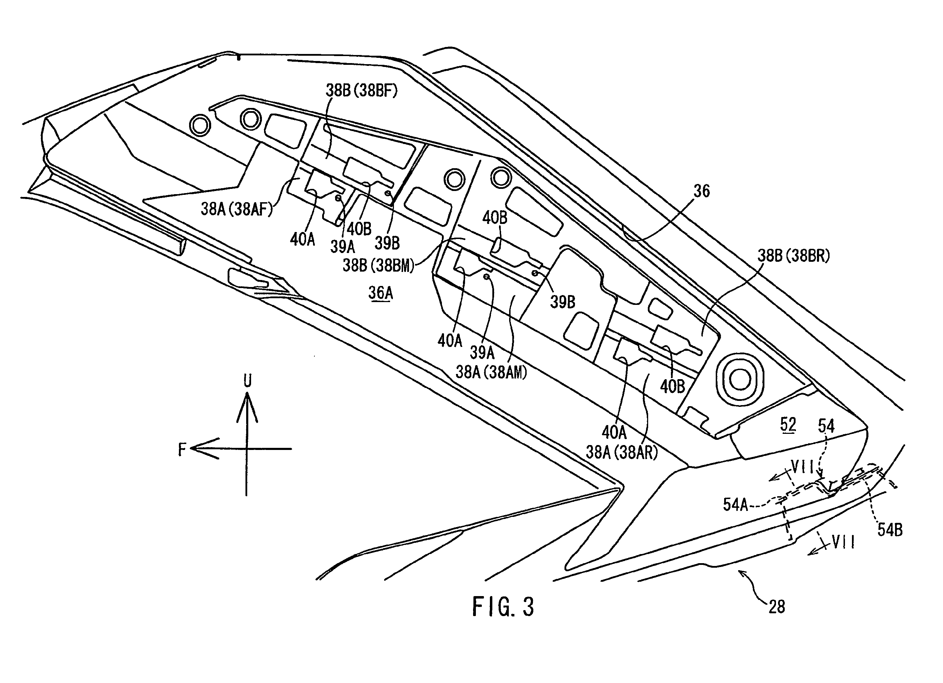

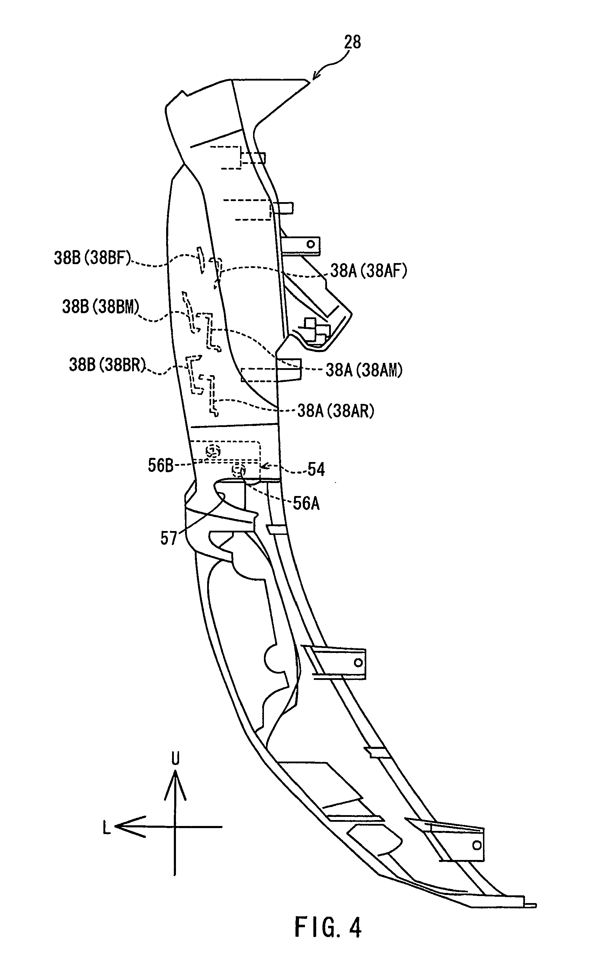

Referring to Figs. 3 and 4, the first and second engagement portions 38A and 38B will be described. Fig. 3 is a left side view of the first side cowl 28 showing the recess 36 being enlarged. Fig. 4 is a rear view of the first side cowl 28 on the left side. In Fig. 3, the arrow F indicates the forward direction of the motorcycle 10 and the arrow U indicates the upward direction of the motorcycle 10. In Fig. 4, the arrow L indicates the leftward direction of the motorcycle 10 and the arrow U indicates the upward direction of the motorcycle 10.

### First Engagement Portion

A plurality of first engagement portions 38A (three of them in this embodiment) are formed. The plurality of first engagement portions 38A are provided apart from one another in the front-back and up-down directions (see Fig. 3).

As shown in Fig. 4, according to the embodiment, among the three first engagement portions 38A, the front-most first engagement portion 38A (hereinafter also referred to as the "first engagement portion 38AF") is positioned more on the inner side in the vehicle-widthwise direction than the other first engagement portions 38A. In other words, the other first engagement portions 38A or the first engagement portion 38A in the middle (hereinafter also referred to as the "first engagement portion 38AM") and the rearmost first engagement portion 38A (hereinafter also referred to as the "first engagement portion 38AR") are approximately in the same position in the vehicle-widthwise direction.

### First Engagement Hole

The first engagement portion 38A has a first engagement hole 40A. The first engagement hole 40A is formed through the first engagement portion 38A in the vehicle-widthwise direction.

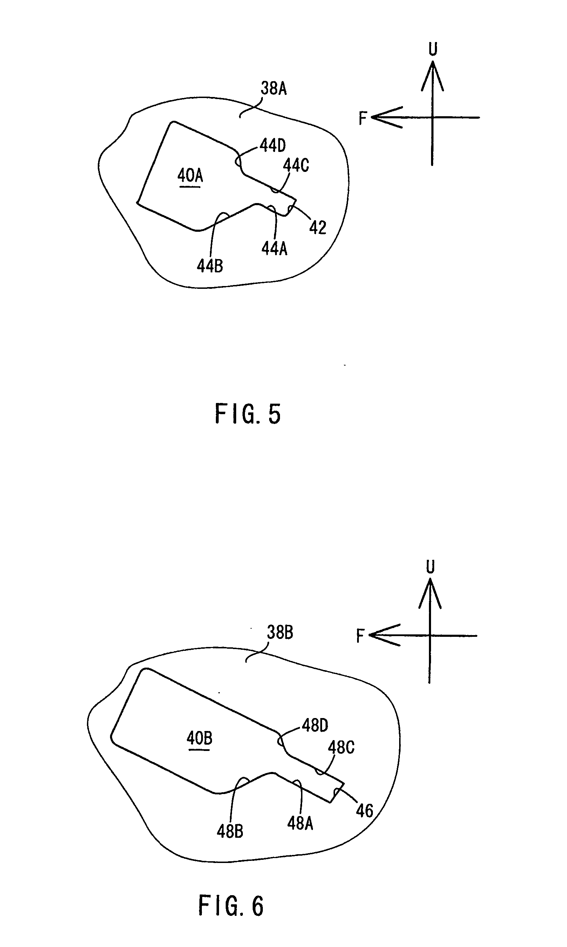

Referring to Fig. 5, the first engagement hole 40A will be described. Fig. 5 is a view for illustrating the first engagement hole 40A. In Fig. 5, the arrow F indicates the forward direction of the motorcycle 10 and the arrow U indicates the upward direction of the motorcycle 10.

A restriction surface 42, a first guide surface 44A, a second guide surface 44B, a third guide surface 44C, and a fourth guide surface 44D are formed at an inner peripheral surface of the first engagement hole 40A.

The restriction surface 42 extends in the up-down direction at a rear end of the first engagement hole 40A. According to the embodiment, the restriction surface 42 extends backward and obliquely upward. More specifically, a lower end of the restriction surface 42 is positioned ahead of an upper end of the restriction surface 42.

The first guide surface 44A extends forward from a lower end of the restriction surface 42. According to the embodiment, the first guide surface 44A extends forward and obliquely upward from the lower end of the restriction surface 42.

The second guide surface 44B extends forward and obliquely downward from a front end of the first guide surface 44A.

The third guide surface 44C extends forward from an upper end of the restriction surface 42 and is positioned above the first guide surface 44A. According to the embodiment, the third guide surface 44C extends forward and obliquely upward from the upper end of the restriction surface 42 and is parallel to the first guide surface 44A.

The fourth guide surface 44D extends forward and obliquely upward from a front end of the third guide surface 44C.

Note that in the plurality of first engagement portions 38A, the shapes and sizes of the first engagement holes 40A do not have to be exactly the same. For example, in the plurality of first engagement holes 40A, the extending directions or lengths of the guide surfaces 44A, 44B, 44C, and 44D do not have to be the same.

### Second Engagement Portion

Referring back to Figs. 3 and 4, there are a plurality of second engagement portions 38B (three of them according to the embodiment). The plurality of second engagement portions 38B are provided apart from each other in the front-back and up-down directions (see Fig. 3). As shown in Fig. 3, the second engagement portion 38B is provided above the first engagement portion 38A. As shown in Fig. 4, the second engagement portion 38B is provided more on the outer side than the first engagement portion 38A in the vehicle-widthwise direction.

As shown in Fig. 4, according to the embodiment, among the three second engagement portions 38B, the front-most second engagement portion 38B (hereinafter also referred to as the "second engagement portion 38BF") is positioned more on the inner side than the other second engagement portions 38B in the vehicle-widthwise direction. The other second embodiments 38B, in other words, the second engagement portion 38B in the middle (hereinafter also referred to as the "second engagement portion 38BM") and the rearmost second engagement portion 38B (hereinafter also referred to as the "second engagement portion 38BR") are approximately in the same position in the vehicle-widthwise direction.

### Second Engagement Hole

The second engagement portion 38B has a second engagement hole 40B. The second engagement hole 40B is formed through the second engagement portion 38B in the vehicle widthwise direction.

Referring to Fig. 6, the second engagement hole 40B will be described. Fig. 6 is a view for illustrating the second engagement hole 40B. In Fig. 6, the arrow F indicates the forward direction of the motorcycle 10 and the arrow U indicates the upward direction of the motorcycle 10.

A restriction surface 46, a first guide surface 48A, a second guide surface 48B, a third guide surface 48C, and a fourth guide surface 48D are formed at an inner peripheral surface of the first engagement hole 40B.

The restriction surface 46 extends in the up-down direction at a rear end of the first engagement hole 40B. In the embodiment, the restriction surface 46 extends backward and obliquely upward. More specifically, a lower end of the restriction surface 46 is positioned ahead of an upper end thereof.

The first guide surface 48A extends forward from the lower end of the restriction surface 46. According to the embodiment, the first guide surface 48A extends forward and obliquely upward from the lower end of the restriction surface 46.

The second guide surface 48B extends forward and obliquely downward from a front end of the first guide surface 48A.

The third guide surface 48C extends forward from an upper end of the restriction surface 46 and is positioned above the first guide surface 48A. According to the embodiment, the third guide surface 48C extends forward and obliquely upward from the upper end of the restriction surface 46 and is parallel to the first guide surface 48A.

The fourth guide surface 48D extends forward and obliquely upward from a front end of the third guide surface 48C.

Note that among the plurality of second engagement portions 38B, the shapes and sizes of the second engagement holes 40B do not have to be exactly the same. For example, among the plurality of second engagement holes 40B, the guide surfaces 48A, 48B, 48C, and 48D do not have to have exactly the same extending direction or the same length. The shape and size of the second engagement hole 40B need not be exactly the same as those of the first engagement hole 40A.

### Communication Hole

Referring back to Fig. 3, the first side cowl 28 has a communication hole 52. The communication hole 52 is positioned at a rear end of the recess 36 and formed through the recess 36 in the vehicle widthwise direction.

### Attachment Portion

An attachment portion 54 is formed at a rear surface of the first side cowl 28. The attachment portion 54 is positioned below the communication hole 52.

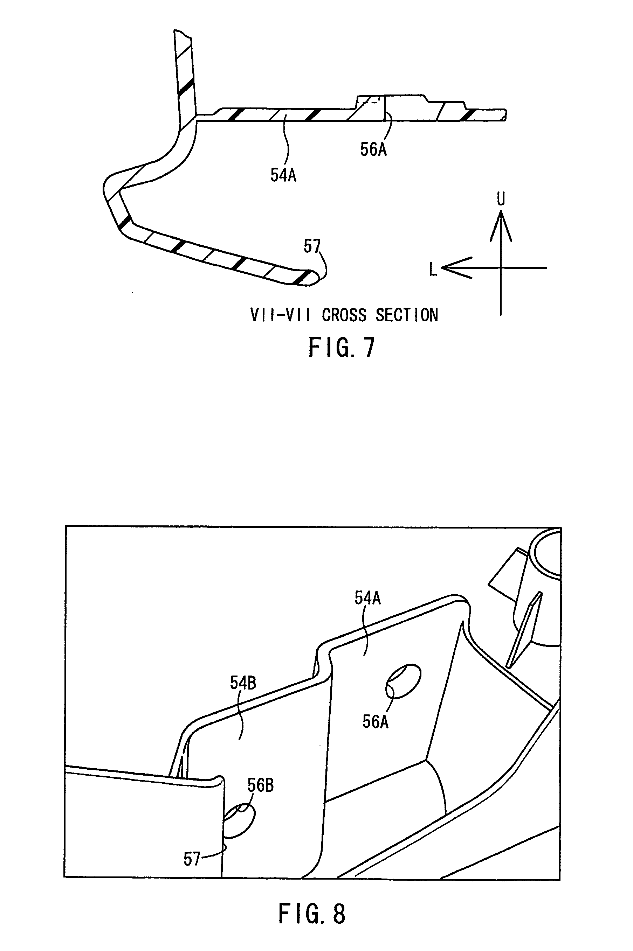

Referring to Figs. 3, 4, 7, and 8, the attachment portion 54 will be described. Fig. 7 is a sectional view taken along line VII-VII in Fig. 3. Fig. 8 is a perspective view of the attachment portion 54 as viewed from a back surface side of the first side cowl 28. In Fig. 7, the arrow L indicates the leftward direction of the motorcycle 10 and the arrow U indicates the upward direction of the motorcycle 10.

The attachment portion 54 includes attachment portions 54A and 54B.

The attachment portion 54A extends in the vehicle widthwise direction and obliquely upward in the backward direction. The attachment portion 54A has an attachment hole 56A.

The attachment portion 54B extends in the vehicle widthwise direction and obliquely upward in the backward direction. The attachment portion 54B is positioned behind the attachment portion 54A.

The attachment portion 54B has an attachment hole 56B. The attachment hole 56B is positioned more on the outer side than the attachment hole 56A in the vehicle widthwise direction (see Fig. 4).

### Opening

Referring to Figs. 4, 7, and 8, the first side cowl 28 has an opening 57. The opening 57 is positioned below the attachment portion 54.

### Second Side Cowl

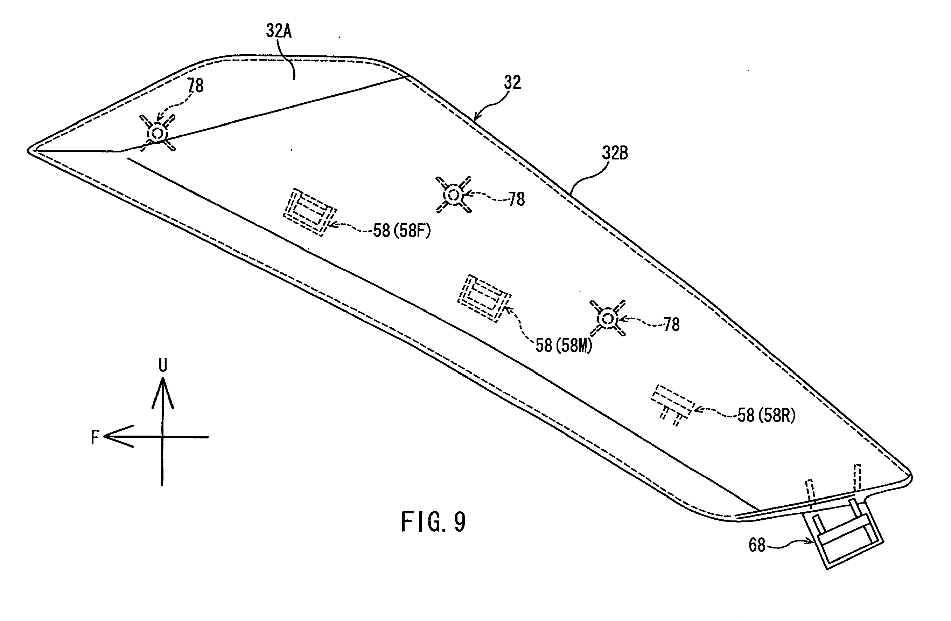

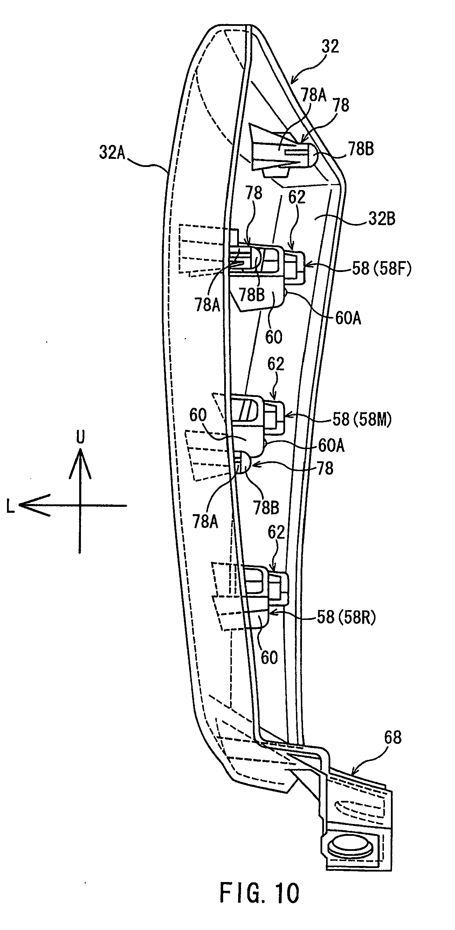

Referring back to Figs. 9 and 10, the second side cowl 32 will be described. In the embodiment, since the second side cowl 32 attached to the first side cowl 28 on the left side and the second side cowl 32 attached to the first side cowl 28 on the right side are symmetrically provided, the second side cowl 32 attached to the first side cowl 28 on the left side will be described and the second side cowl 32 attached to the first side cowl 28 on the right side will not be described. In Fig. 9, the arrow F indicates the forward direction of the motorcycle 10 and the arrow U indicates the upward direction of the motorcycle 10. In Fig. 10, the arrow L indicates the leftward direction of the motorcycle 10 and the arrow U indicates the upward direction of the motorcycle 10.

The second side cowl 32 is made of a opaque material (such as synthetic resin) and includes a first wall portion 32A and a second wall portion 32B. The first wall portion 32A extends in the front-back and up-down directions. The second wall portion 32B is formed around the entire outer edge of the first wall portion 32A and extends inward in the vehicle widthwise direction from a back surface of the first wall surface 32A.

### Engagement Portion

A plurality of engagement portions 58 (three of them according to the embodiment) are formed at the back surface of the first wall portion 32A. The plurality of engagement portions 58 are provided apart from one another in the front-back and up-down directions (see Fig. 9).

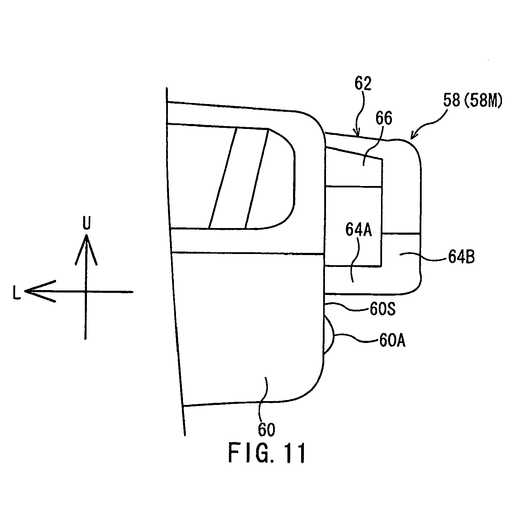

Referring to Fig. 11, the engagement portion 58 will be described.

Fig. 11 is a view for illustrating the engagement portion 58 being enlarged as viewed from the rear side of the second side cowl 32. In Fig. 11, the arrow L indicates the leftward direction of the motorcycle 10 and the arrow U indicates the upward direction of the motorcycle 10. Note that in the following description, an engagement portion 58 (an engagement portion 58M) will be described, while the other engagement portions 58 (engagement portions 58F and 58R) having identical structures to the engagement portion 58 (the engagement portion 58M) shown in Fig. 11 will not be described.

The engagement portion 58 includes a support portion 60 and an engagement piece 62.

The support portion 60 is formed to project inward in the vehicle widthwise direction from the back surface of the first wall portion 32A. The engagement piece 62 is formed at a projection end surface 60S of the support portion 60.

The engagement piece 62 includes a first contact portion 64A, a second contact portion 64B, and a reinforcement portion 66.

The first contact portion 64A projects inward in the vehicle widthwise direction from the projection end surface 60S of the support portion 60. The first contact portion 64A extends in the front-back direction. According to the embodiment in particular, the first contact portion 64A extends forward and obliquely upward.

The second contact 64B is formed at a projection end of the first contact portion 64A. The second contact portion 64B extends upward from the projection end of the first contact portion 64. The second contact portion 64B is formed along the entire length of the first contact portion 64A.

According to the embodiment, as shown in Fig. 10, among the three engagement portions 58, the second contact portion 64B (hereinafter also referred to as the "second contact portion 64BF") of the front most engagement portion 58 (hereinafter also referred to as the "engagement portion 58F") is positioned more on the inner side than the second contact portions 64B of the other engagement portions 58. Among the other engagement portions 58, in other words, among the engagement portion 58 positioned in the middle (hereinafter also referred to as the "engagement portion 58M") and the rearmost engagement portion 58 (hereinafter also referred to as the "engagement portion 58R"), the second contact portion 64B of the engagement portion 58R (hereinafter also referred to as the "second contact portion 64BR") is positioned more on the inner side than the second contact portion 64B of the engagement portion 58M (hereinafter also referred to as the "second contact portion 64BM") in the vehicle widthwise direction.

As shown in Fig. 11, the reinforcement portion 66 is formed at a front end of the first contact portion 64A, i.e., at a front end of the second contact portion 64B. The reinforcement portion 66 extends in the up-down direction. According to the embodiment in particular, the reinforcement portion 66 extends backward and obliquely upward from an upper surface of the first contact portion 64A.

### Attachment Portion

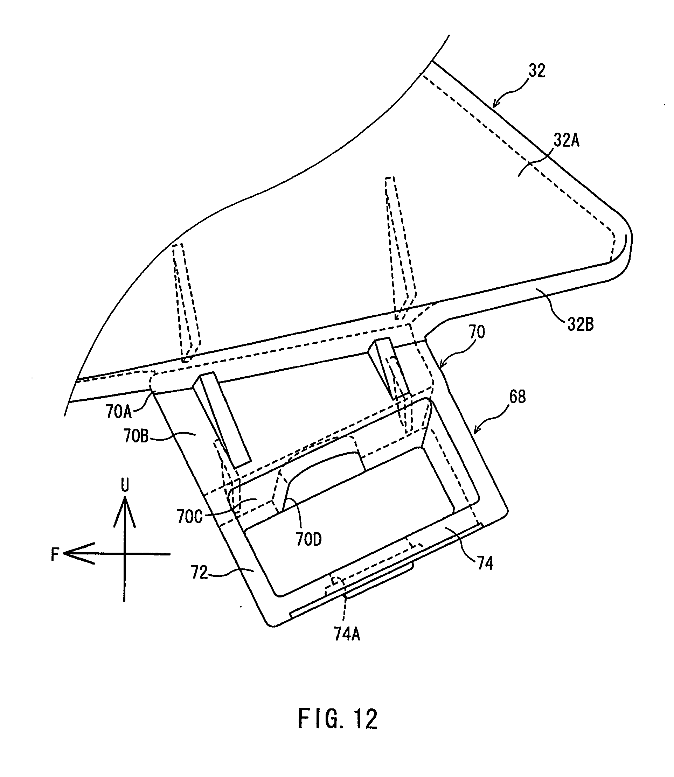

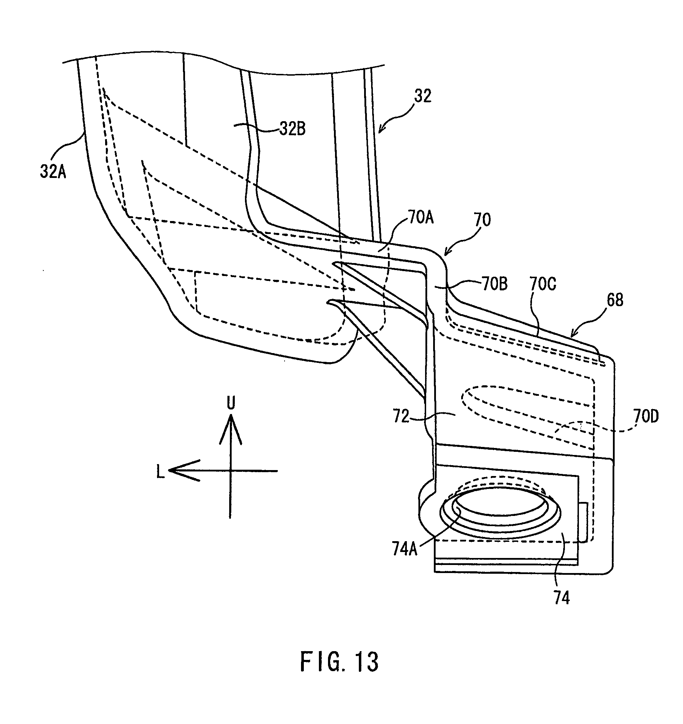

The second side cowl 32 includes an attachment portion 68 at its lower end. Referring to Figs. 12 and 13, the attachment portion 68 will be described. Fig. 12 is a view for illustrating the second side cowl 32 as viewed from the left side showing the attachment portion 68 being enlarged. Fig. 13 is a view for illustrating the second side cowl 32 as viewed from the back side showing the attachment portion 68 being enlarged.

The attachment portion 68 includes a connection piece 70, a support piece 72, and an attachment piece 74.

The connection piece 70 includes a first connection piece 70A, a second connection piece 70B, and a third connection piece 70C. The first connection piece 70A extends inward in the vehicle widthwise direction from a tip end of the second wall portion 32B. The second connection piece 70B extends downward (backward and obliquely downward according to the embodiment) from a tip end of the first connection piece 70A. The third connection piece 70C extends inward in the vehicle widthwise direction from a tip end of the second wall portion 70B. The third connection piece 70C has a notch 70D.

The support piece 72 is formed along an outer edge of the third connection piece 70C. According to the embodiment, at the outer edge of the third connection piece 70C, the support piece 72 is formed at an edge other than an edge positioned on the outer side in the vehicle-widthwise direction between the pair of edges opposed in the vehicle-widthwise direction. The support piece 72 extends downward (backward and obliquely downward according to the embodiment) from a lower surface of the third connection piece 70C.

The attachment piece 74 is provided below the third connection piece 70C. The attachment piece 74 is connected to a lower end of the support piece 72. The attachment piece 74 has an attachment hole 74A.

### Connection Member

As shown in Fig. 10, the second side cowl 32 includes a plurality of connection members 78 (three of them according to the embodiment). The connection members 78 each include a support portion 78A and a contact portion 78B.

The support portion 78A extends inward in the vehicle-widthwise direction from a back surface of the first wall portion 32A. The contact portion 78B is attached to a tip end of the support portion 78A. The contact portion 78B is made of rubber.

### Second Side Cowl Attachment State

The second side cowl 32 is attached to the first side cowl 28 in a detachable manner. The second side cowl 32 has a first attachment state and a second attachment state.

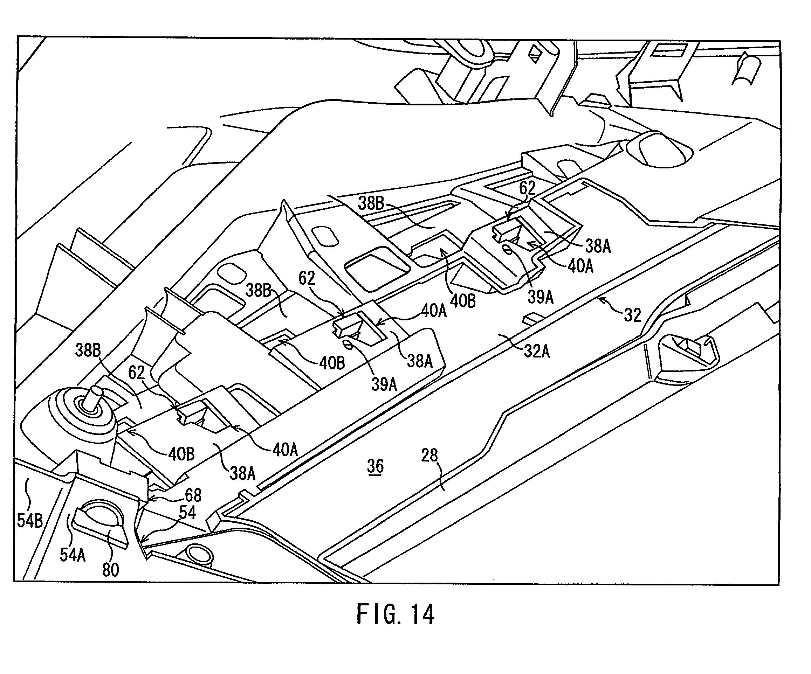

As shown in Fig. 14, in the first attachment state, the engagement piece 62 of the engagement portion 58 provided in the second side cowl 32 engages with the first engagement hole 40A formed at the first engagement portion 38A provided in the first side cowl 28. In this way, the second side cowl 32 is attached to the first side cowl 28.

More specifically, the engagement piece 62 provided in the engagement portion 58F engages with the first engagement hole 40A formed at the first engagement portion 38AF. The engagement piece 62 provided in the engagement portion 58M engages with the first engagement hole 40A formed at the first engagement portion 38AM. The engagement piece 62 provided in the engagement portion 58R engages with the first engagement hole 40A formed at the first engagement portion 38AR.

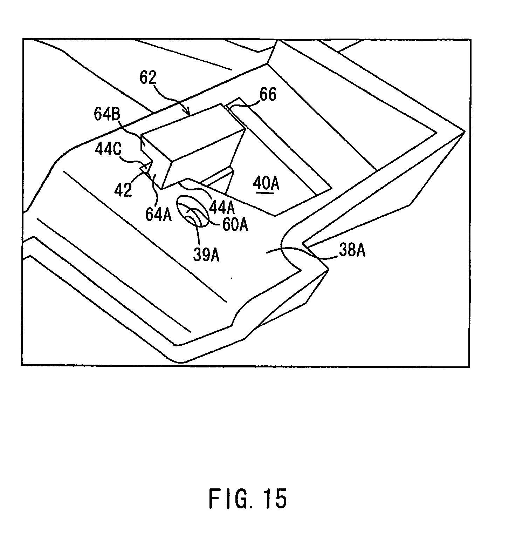

Referring to Figs. 15 to 17, the engagement state of the engagement piece 62 and the first engagement hole 40A will be described more in detail. Note that Figs. 15 to 17 are views for illustrating the engagement state of the engagement piece 62 provided in the engagement portion 58F and the first engagement hole 40A formed at the first engagement portion 38AF, while the engagement state between the engagement pieces 62 provided in the engagement portions 58M and 58R and the first engagement holes 40A formed at the first engagement portions 38AM and 38AR is the same as the engagement state between the engagement piece 62 provided in the engagement portion 58F and the first engagement hole 40A formed at the first engagement portion 38AF. Therefore, the engagement state between the engagement pieces 62 provided in the engagement portions 58M and 58R and the first engagement holes 40A formed at the first engagement portions 38AM and 38AR will not be described.

The first contact portion 64A of the engagement piece 62 is positioned between the first guide surface 44A and the third guide surface 44C in the first engagement hole 40. Because of gravity, the first contact portion 64A contacts the first guide surface 44A and the restriction surface 42. At the time, the reinforcement portion 66 is positioned ahead of the fourth guide surface 44D.

The second contact portion 64B of the engagement piece 62 is positioned more on the inner side than the back surface of the first side cowl 28 in the vehicle-widthwise direction. More specifically, the second contact portion 64B can contact the back surface of the first side cowl 28. The second contact portion 64B may be in contact with or apart from the back surface of the first side cowl 28.

The engagement piece 62 engages with a peripheral edge of the first engagement hole 40A as follows.

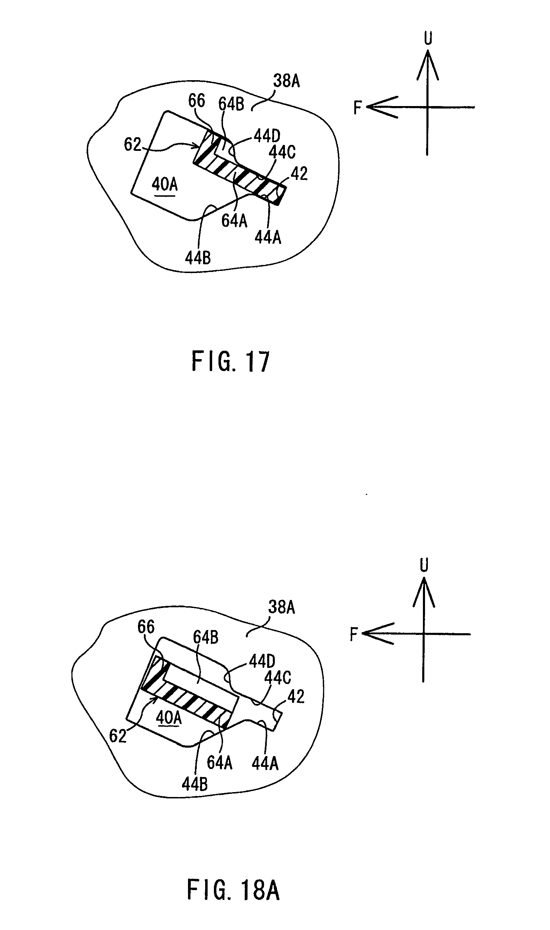

As shown in Fig. 18A, the engagement piece 62 is entered to the first engagement hole 40A. At the time, the first contact portion 64A is positioned in the first engagement hole 40A. The second contact portion 64B is positioned more on the inner side than the back surface of the first side cowl 28 in the vehicle-widthwise direction.

Then, the second side cowl 32 is moved backward. At the time, the first contact portion 64A moves backward while it is in contact with the second guide surface 44B.

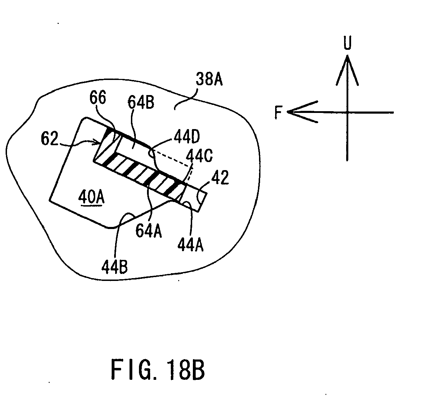

When the first contact portion 64A moves to a terminal end of the second guide surface 44B, the first contact portion 64A enters between the first guide surface 44A and the third guide surface 44C as shown in Fig. 18B. When the first contact portion 64A contacts the restriction surface 42, the engagement piece 62 engages with the periphery of the first engagement hole 40A as shown in Figs. 15 to 17.

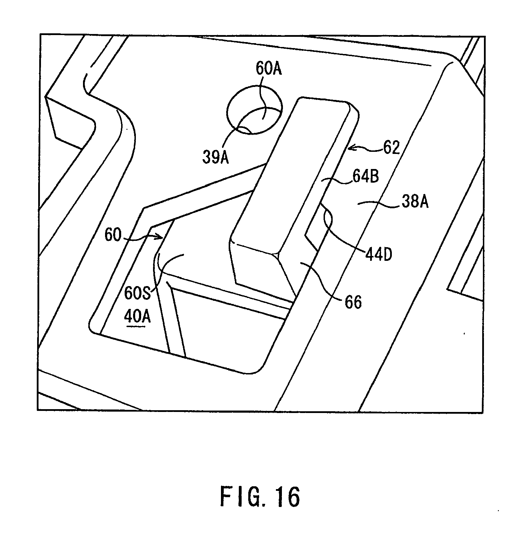

At the time, as shown in Figs. 15 and 16, a projection 60A formed at the projection end surface 60S of the support portion 60 provided in the engagement portion 58F (see Figs. 10 and 11) is positioned in the hole 39A formed in the first engagement portion 38AF (see Fig. 3). Similarly, a projection 60A formed at the projection end surface 60S of the support portion 60 provided in the engagement portion 58M is positioned in the hole 39A formed at the first engagement portion 38AM. In this way, if the first contact portion 64A is not in contact with the restriction surface 42, the engagement of the engagement piece 62 and the periphery of the first engagement hole 40A can be determined.

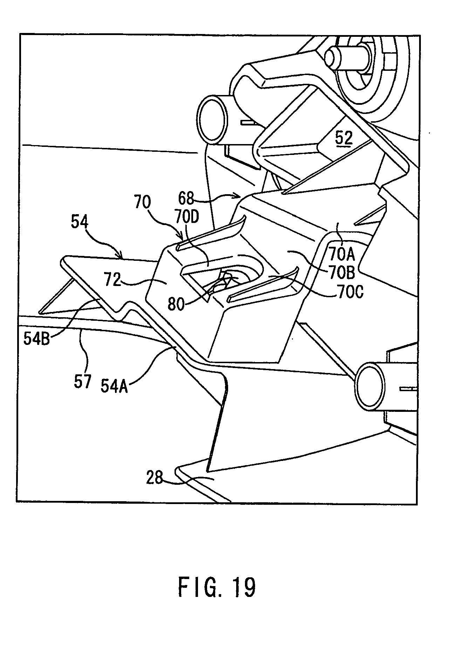

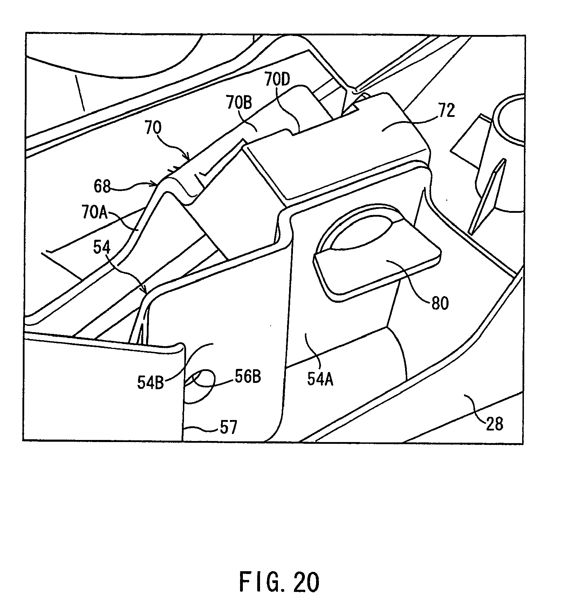

As shown in Figs. 19 and 20, the attachment portion 68 provided in the second side cowl 32 is placed on the attachment portion 54A provided in the first side cowl 28. At the time, a connector 80 is inserted to the attachment hole 74A formed at the attachment piece 74 provided in the attachment portion 68 and the attachment hole 56A formed at the attachment portion 54A. One end of the connector 80 engages with an upper surface of the attachment piece 74 and the other end of the connector 80 engages with a lower end of the attachment portion 54A. In this way, the attachment portion 68 provided in the second side cowl 32 is attached to the attachment portion 54A provided in the first side cowl 28. The connector 80 is attached through the opening 57 formed at the first side cowl 28.

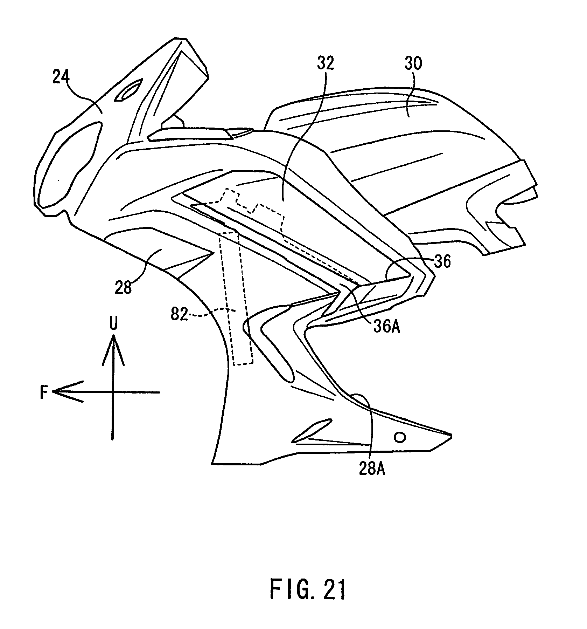

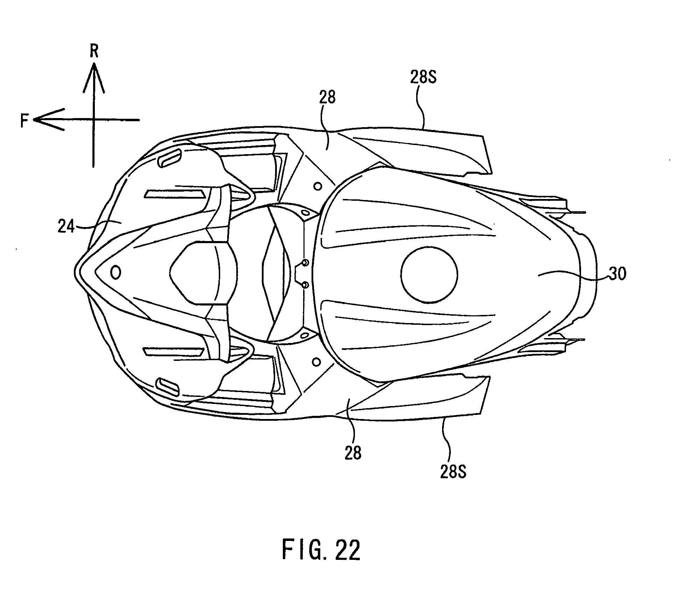

As shown in Fig. 21, in the first attachment state, the entire second side cowl 32 is provided in the recess 36. Therefore, as shown in Fig. 22, the second side cowl 32 does not project outwardly from the surface 28S of the first side cowl 28 in the vehicle-widthwise direction. More specifically, in the first attachment state, the rear end of the second side cowl 32 does not project from the surface 28S of the first side cowl 28. In the first attachment state, the second side cowl 32 covers a part of the ventilation hole 36A.

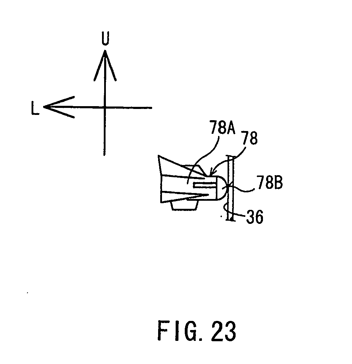

As shown in Fig. 23, in the first attachment state, the contact portion 78B of the contact member 78 is in contact with the inner surface of the recess 36.

Note that the second side cowl 32 in the first attachment state can be removed as follows.

The connector 80 is removed. In this way, the coupling state between the attachment portion 54A and the attachment piece 74 is canceled.

Then, the second side cowl 32 is moved forward (forward and obliquely upward according to the embodiment). In this way, the engagement state between the engagement piece 62 and the periphery of the first engagement hole 40A is canceled. The projection 60 is detached from the hole 39A. As a result, the second side cowl 32 is removed from the first side cowl 28.

Now, a second attachment state will be described.

### Second Attachment State

In the second attachment state, the engagement piece 62 of the engagement portion 58 provided in the second side cowl 32 engages with the second engagement hole 40B formed in the second engagement 38B provided in the first side cowl 28, so that the second side cowl 32 is attached to the first side cowl 28.

More specifically, the engagement piece 62 provided in the engagement portion 58F engages with the second engagement hole 40B formed in the second engagement portion 38BF. The engagement piece 62 provided in the engagement portion 58M engages with the second engagement hole 40B formed at the second engagement portion 38BM. The engagement piece 62 provided in the engagement piece 58R engages with the second engagement hole 40B formed at the second engagement piece 38BR.

At the time, the first contact portion 64A of the engagement piece 62 is positioned between the first guide surface 48A and the third guide surface 48C in the second engagement hole 40B. Because of gravity, the first contact portion 64A contacts the first guide surface 48A and the restriction surface 46. At the time, the reinforcement portion 66 is positioned ahead of the fourth guide surface 48D.

The second contact portion 64B of the engagement piece 62 is positioned more on the inner side than the back surface of the first side cowl 28 in the vehicle widthwise direction. More specifically, the second contact portion 64B can be in contact with the back surface of the first side cowl 28. The second contact portion 64B may be in contact with or apart from the back surface of the first side cowl 28.

The engagement piece 62 engages with the periphery of the second engagement hole 40B as follows.

The engagement piece 62 is entered to the second engagement hole 40B. At the time, the second contact portion 64B is positioned more on the inner side than the back surface of the first side cowl 28 in the vehicle widthwise direction.

Then, the second side cowl 32 is moved backward. At the time, the first contact portion 64A moves backward while it is in contact with the second guide surface 48B.

When the first contact portion 64A is moved to a terminal end of the second guide surface 48B, the first contact portion 64A enters between the first guide surface 48A and the third guide surface 48C. In this way, the engagement piece 62 engages with the periphery of the second engagement hole 40B.

At the time, the projection 60A formed at the projection end surface 60S of the support portion 60 provided in the engagement piece 58F (see Figs. 10 and 11) is positioned in the hole 39B formed in the second engagement piece 38BF (see Fig. 3). Similarly, the projection portion 60A formed at the projection end surface 60S of the support portion 60 provided in the engagement piece 58M is positioned in the hole 39 formed in the first engagement portion 38BM. In this way, if the first contact portion 64B is not in contact with the restriction surface 42, the engagement between the engagement piece 62 and the periphery of the second engagement hole 40B can be determined.

The attachment portion 68 provided in the second side cowl 32 is placed on the attachment portion 54B provided in the first side cowl 28. At the time, the connector 80 is inserted to the attachment hole 74A formed at the attachment piece 74 provided in the attachment portion 68 and the attachment hole 56B formed the attachment portion 54B. The connector 80 has one end engaged with an upper surface of the attachment piece 74 and the other end engaged with a lower surface of the attachment portion 54B. In this way, the attachment portion 68 provided in the second side cowl 32 is attached to the attachment portion 54B provided in the first side cowl 28. The connector 80 is attached to the first side cowl 28 through the opening 57 formed at the first side cowl 28.

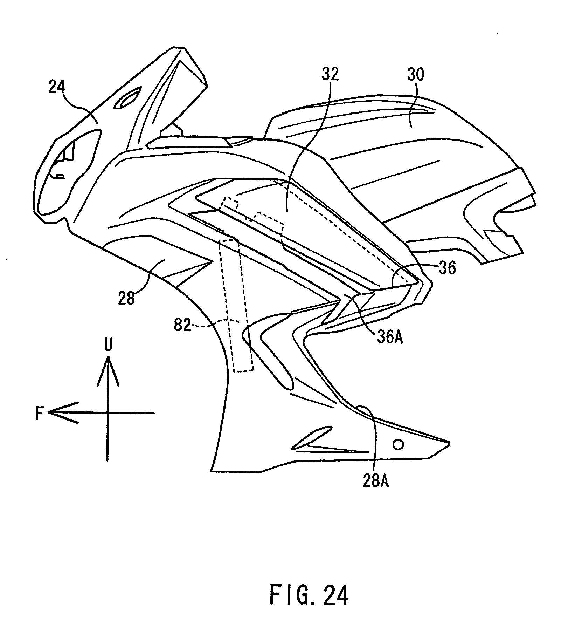

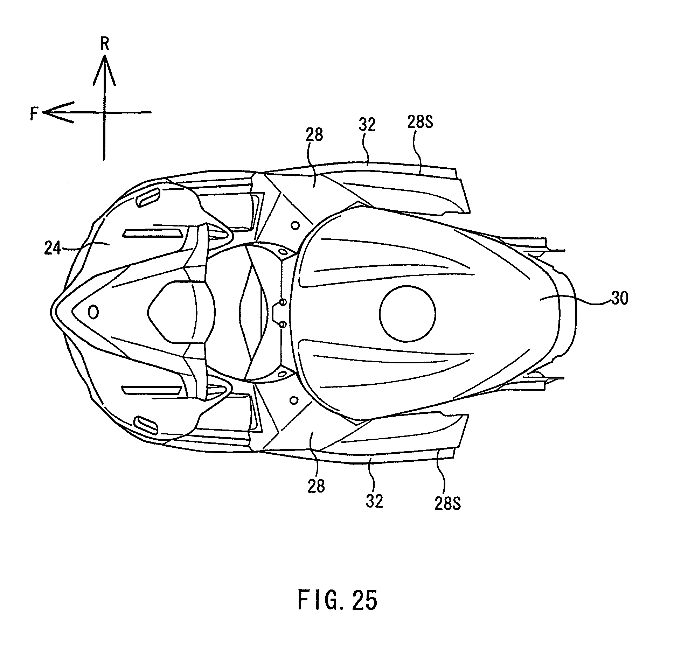

In the second attachment state, the second side cowl 32 is attached to the first side cowl 28 behind a position corresponding to the first attachment state. Therefore, as shown in Fig. 24, a rear end of the second side cowl 32 is positioned on the outer side of the recess 36 in a side view of the vehicle. As a result, as shown in Fig. 25, the second side cowl 32 projects outward from the surface 28S of the first side cowl 28 in the vehicle widthwise direction. More specifically, in the second attachment state, the rear end of the second side cowl 32 projects from the surface 28S of the first side cowl 28.

Note that in the second attachment state, in a side view of the vehicle, the rear end of the second side cowl 32 does not have to be positioned on the outer side of the recess 36. For example, a step may be formed at an outer edge of the recess 36 and the rear end of the second side cowl 32 may be positioned on the step. If the step is more on the outer side in the vehicle widthwise direction than an area in which the rear end of the second side cowl 32 is positioned in the first attachment state, the rear end of the second side cowl 32 projects from the surface of the first side cowl 28 in the second attachment state.

In the second attachment state, the second side cowl 32 covers a part of the ventilation hole 36A. The ratio of the ventilation hole 36A covered by the second side cowl 32 in the second attachment state is smaller than the ratio of the ventilation hole 36A covered by the second side cowl 32 in the first attachment state.

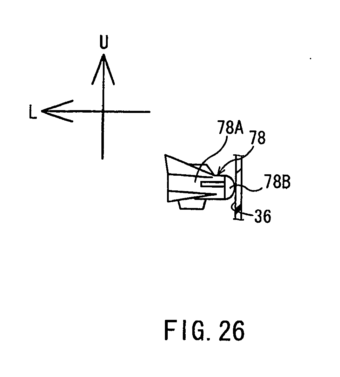

As shown in Fig. 26, in the second attachment state, the contact portion 78B of the contact member 78 is in contact with the inner surface of the recess 36. In the second attachment state, the position where the contact portion 78B contacts the inner surface of the recess 36 is different from the position where the contact portion 78B contacts the inner surface of the recess 36 in the first state.

Note that the second side cowl 32 in the second attachment state can be removed as follows.

The connector 80 is removed. Then, the coupling state between the attachment portion 54B and the attachment piece 74 is canceled.

Then, the second side cowl 32 is moved forward (forward and obliquely upward according to the embodiment). In this way, the engagement state between the engagement piece 62 and the periphery of the second engagement hole 40B is canceled. The projection 60 is detached from the hole 39B. As a result, the second side cowl 32 is removed from the first side cowl 28.

As shown in Figs. 21 and 24, in a side view of the vehicle, a radiator 82 is provided. The radiator 82 is provided between the pair of left and right first side cowls 28 in the vehicle widthwise direction. The radiator 82 is positioned ahead of the ventilation hole 36A in a side view of the vehicle.

The motorcycle 10 includes the seat 34, the first side cowl 28, and the second side cowl 32. The first side cowl 28 is positioned ahead of the seat 34 in a side view of the vehicle. The second side cowl 32 is attached to the surface of the first side cowl 28 through attachment members 38, 58, 54, 68, and 80. The second side cowl 32 includes a plurality of attachment states. The plurality of attachment states include the first and second attachment states. In the second attachment state, the second side cowl 32 is attached to the first side cowl 28 behind a position corresponding to the first attachment state. A length of the rear end of the second side cowl 32 projecting from the surface of the first side cowl 28 in the vehicle widthwise direction is larger in the second attachment state than in the first attachment state.

In this way, the length of the rear end of the second side cowl 32 projecting from the surface 28S of the first side cowl 28 is large in a position close to a rider seated on the seat 34. Therefore, a wind-shielding effect by the second side cowl 32 is more easily obtained.

When the attachment state of the second side cowl 32 is changed, the second side cowl 32 itself is moved front-back direction. Therefore, unlike for example the case of attaching the second side cowl 32 to the first side cowl 28 by a hinge, the attachment position for the hinge need not be taken into consideration. As a result, the shape of the second side cowl 32 may be designed more easily.

In the motorcycle 10, the recess 36 is formed on the surface 28S of the first side cowl 28. The second side cowl 32 is provided in the recess 36.

In this way, the attachment state (first attachment state) in which the rear end of the second side cowl 32 does not project from the surface 28S of the first side cowl 28 can be achieved.

In the motorcycle 10, the radiator 82 is further provided. The first side cowl 28 has the ventilation hole 36A that communicates between the front and back surface sides of the first side cowl 28. In a side view of the vehicle, the radiator 82 is positioned ahead of the ventilation hole 36A.

In this way, air is allowed to flow from the inside to the outside of the first side cowl 28. Therefore, the cooling efficiency by the radiator 82 is increased.

In the motorcycle 10, in a side view of the vehicle, the second side cowl 32 covers a part of the ventilation hole 36A. The ratio of the ventilation hole 36A covered by the second side cowl 32 is different among the plurality of attachment states.

In this way, when the attachment state of the second side cowl 32 is changed, a substantial opening area of the ventilation hole 36A is changed. Therefore, the amount of air allowed to flow from the inside to the outside of the first side cowl 28 through the ventilation hole 36A can be adjusted.

In the motorcycle 10, the ratio of the ventilation hole 36A covered by the second side cowl 32 in a position corresponding to the second attachment state is smaller than the ratio of the ventilation hole 36A covered by the second side cowl 32 in a position corresponding to the first attachment state. In this way, a length of the rear end of the second side cowl 32 projecting in the vehicle widthwise direction from the surface 28S of the first side cowl 28 is larger in the second state and therefore the ventilation hole 36A has a larger substantial opening area in the second attachment state than in the first attachment state. Therefore, heat from the engine is more easily let out from the ventilation hole 36A during continuous traveling such as touring, and traveling wind is less likely to blow against a rider. As a result, comfortable long distance traveling can be achieved. The substantial opening area of the ventilation hole 36A, in other words, an exhaust outlet for wind passed through the radiator 82 is enlarged, and therefore during long distance traveling at high speed, for example, traveling wind can be restrained from acting as resistance.

In the motorcycle 10, in a side view of the vehicle, the ventilation hole 36A is positioned ahead of the second side cowl 32. In this way, the substantial opening area of the ventilation hole 36A can be changed more easily by changing the attachment position for the second side cowl 32.

In the motorcycle 10, the attachment member includes the first engagement portion 38 and the second engagement portion 58. The first engagement portion 38 is formed at a surface of the first side cowl 28. The second engagement portion 58 is formed at a back surface of the second side cowl 32 and engages with the first engagement portion 38.

In this way, the first engagement portion 38 and the second engagement portion 58 engage with each other, so that the second side cowl 32 is attached to the first side cowl 28. Therefore, the second side cowl 32 can be detached more easily.

In the motorcycle 10, the first engagement portion is the engagement holes 40A and 40B formed at the surface of the first side cowl 28. The second engagement portion is the engagement piece 62 that engages with the peripheries of the engagement holes 40A and 40B.

In this way, the engagement piece 62 engages with the periphery of the engagement holes 40A and 40B, so that the second side cowl 32 is attached to the first side cowl 28. Therefore, the second side cowl 32 can be detached more easily.

In the motorcycle 10, the restriction surface 42 is formed at an inner peripheral surface of the engagement hole 40A. The restriction surface 42 extends in the up-down direction of the vehicle at a rear end of the engagement hole 40A. The restriction surface 46 is formed at an inner peripheral surface of the engagement hole 40B. The restriction surface 46 extends in the up-down direction of the vehicle at a rear end of the engagement hole 40B. The engagement piece 62 includes the first contact portion 64A and the second contact portion 64B. The first contact portion 64A can contact the restriction surfaces 42 and 46. The second contact portion 64B can contact the back surface of the second side cowl 32 while the first contact portion 64A is in contact with the restriction surfaces 42 and 46.

In this way, while the first contact portion 64A is in contact with the restriction surfaces 42 and 46, the second contact portion 64B can contact the back surface of the second side cowl 32. More specifically, a position where the first contact portion 64A contacts the restriction surfaces 42 and 46 is a position where the engagement piece 62 engages with the periphery of the engagement holes 40A and 40B. This makes it easier to determine the position where the engagement piece 62 engages with the periphery of the engagement holes 40A and 40B

In the motorcycle 10, the first and second guide surfaces 44A and 44B are formed at the inner peripheral surface of the engagement hole 40A. The first guide surface 44A extends forward from a lower end of the restriction surface 42 and can be contacted by the first contact portion 64A. The second guide surface 44B extends forward and obliquely downward from a front end of the first guide surface 44A and can be contacted by the first contact portion 64A. The first and second guide surfaces 48A and 48B are formed at the inner peripheral surface of the engagement hole 40B. The first guide surface 48A extends forward from a lower end of the restriction surface 46 and can be contacted by the first contact portion 64A. The second guide surface 48B extends forward and obliquely downward from a front end of the first guide surface 48A and can be contacted by the first contact portion 64A.

In this way, the direction in which the first contact portion 64A moves in contact with the first guide surface 44A and the direction in which the first contact portion 64A moves in contact with the second guide surface 44B are different. Therefore, the first contact portion 64A can be guided more easily to the position where it contacts the restriction surface 42.

The direction in which the first contact portion 64A moves in contact with the first guide surface 48A and the direction in which the first guide portion 64A moves in contact with the second guide surface 48B are different. Therefore, the first contact portion 64A can be guided more easily to the position where it contacts the restriction surface 46.

In the motorcycle 10, the first guide surface 44A extends forward and obliquely upward from a lower end of the restriction surface 42. The first guide surface 48A extends forward and obliquely upward from a lower end of the restriction surface 46.

In this way, the first contact portion 64A contacts the first guide surface 44A and the restriction surface 42 because of gravity. This makes it easier to keep the first contact portion 64A in contact with the restriction surface 42.

The first contact portion 64A contacts the first guide surface 48A and the restriction surface 46 because of gravity. The first contact portion 64A can be easily kept in contact with the restriction surface 46.

In the motorcycle 10, the attachment member includes the first attachment portion 54, the second attachment portion 68, and the connector 80. The first attachment portion 54 is formed at the back surface of the first side cowl 28. The second attachment portion 68 is formed at the second side cowl 32 and overlaps the first attachment portion 54. The second attachment portion 68 is provided on the back surface side of the first side cowl 28 through the communication hole 52 formed at the first side cowl 28. The connector 80 couples the first attachment portion 54 and the second attachment portion 68.

In this case, the first attachment portion 54 and the second attachment portion 68 are coupled on the back surface side of the first side cowl 28. More specifically, the connector 80 is hardly recognizable. Therefore, the connector 80 can be prevented from being removed accidentally by a third party.

In the motorcycle 10, the first side cowl 28 includes an opening 57 that opens under the first side cowl 28 in a position under and corresponding to the first attachment portion 54. The connector 80 is provided on the back surface side of the first side cowl 28 through the opening 57.

This makes it easier to couple the first attachment portion 54 and the second attachment portion 68 using the connector 80.

In the motorcycle 10, the second side cowl 32 includes the contact member 78 provided at the back surface of the second side cowl 32. While the second side cowl 32 is attached to the first side cowl 28, the contact member 78 is in contact with the surface of the first side cowl 28 (the inner side of the recess 36).

In this way, the attachment state of the second side cowl 32 is stabilized.

As shown in Fig. 9, in the motorcycle 10, some of the plurality of contact members 78 are provided behind the engagement portion 58 in the advancing direction of the vehicle. Therefore, force acting on the second side cowl 32 caused by traveling wind blowing from the inside to the outside of the ventilation hole 36A, in other words, force acting to tear away the second side cowl 32 can be resisted.

In the motorcycle 10, the contact member 78 includes the contact portion 78B. The contact portion 78B is made of rubber and contacts the surface of the first side cowl 28 (the inner side of the recess 36).

In this way, the vibration of the second side cowl 32 can be reduced.

The tourer type motorcycle has been described above as the embodiment, but the present invention is not limited to the type of motorcycle. For example, the present invention may be employed in a motorcycle other than a touring motorcycle, or in a three- or four-wheeled leaning vehicle.

## Claims

1. A saddle riding type vehicle (10), comprising:
a seat (34);
a first side cowl (28) provided ahead of the seat (34) in a side view of the vehicle (10); and
a second side cowl (32) attached to a surface of the first side cowl (28) through an attachment member,
the second side cowl (32) having a plurality of attachment states,
the plurality of attachment states comprising a first attachment state and a second attachment state in which the second side cowl (32) is attached to the first side cowl (28) behind a position corresponding to the first attachment state,
a length of a rear end of the second side cowl (32) projecting from the surface of the first side cowl (28) in the vehicle-widthwise direction being larger in the second attachment state than in the first attachment state.

2. The saddle riding type vehicle (10) according to claim 1, wherein a recess (36) is formed at the surface (28S) of the first side cowl (28), and
the second side cowl (32) is provided in the recess (36).

3. The saddle riding type vehicle (10) according to claim 1 or 2, further comprising a radiator (82), wherein the first side cowl (28) has a ventilation hole (36A) that communicates between front and back surface sides of the first side cowl (28), and
the radiator (82) is positioned ahead of the ventilation hole (36A) in a side view of the vehicle (10).

4. The saddle riding type vehicle (10) according to claim 3, wherein in a side view of the vehicle (10), the second side cowl (32) covers a part of the ventilation hole (36A), and
a ratio of the ventilation hole (36A) covered by the second side cowl (32) is different among the plurality of attachment states.

5. The saddle riding type vehicle (10) according to claim 4, wherein a ratio of the ventilation hole (36A) covered by the second side cowl (32) in a position corresponding to the second attachment state is smaller than a ratio of the ventilation hole (36A) covered by the second side cowl (32) in a position corresponding to the first attachment state.

6. The saddle riding type vehicle (10) according to any one of claims 3 to 5, wherein in a side view of the vehicle (10), the ventilation hole (36A) is positioned ahead of the second side cowl (32).

7. The saddle riding type vehicle (10) according to any one of claims 1 to 6, wherein the attachment member comprises:
a first engagement portion (38) formed at the surface of the first side cowl (28); and
a second engagement portion (58) formed at a back surface of the second side cowl (32) to engage with the first engagement portion (38).

8. The saddle riding type vehicle (10) according to claim 7, wherein the first engagement portion (38) is an engagement hole (40A, 40B) formed at the surface of the first side cowl (28), and
the second engagement portion (58) is an engagement piece (62) that engages with a peripheral edge of the engagement hole (40A, 40B).

9. The saddle riding type vehicle (10) according to claim 8, wherein at an inner peripheral surface of the engagement hole (40A, 40B), a restriction surface (42, 46) is formed at a rear end of the engagement hole (40A, 40B) to extend in an up-down direction of the vehicle (10),
the engagement piece (62) comprises:
a first contact portion (64A) that can contact the restriction surface (42, 46) ; and
a second contact portion (64B) that can contact the back surface of the second side cowl (32) while the first contact portion (64A) is in contact with the restriction surface (42, 46).

10. The saddle riding type vehicle (10) according to claim 9, wherein the inner peripheral surface of the engagement hole (40A, 40B) has a first guide surface (44A, 48A) that extends forward from a lower end of the restriction surface (42, 46) and can be contacted by the first contact portion (64A), and
a second guide surface (44B, 48B) that extends forward and obliquely downward from a front end of the first guide surface (44A, 48A) and can be contacted by the first contact portion (64A).

11. The saddle riding type vehicle (10) according to claim 10, wherein the first guide surface (44A, 48A) extends forward and obliquely upward from the lower end of the restriction surface (42, 46).

12. The saddle riding type vehicle (10) according to any one of claims 1 to 11, wherein the attachment member comprises:
a first attachment portion (54) formed at the first side cowl (28);
a second attachment portion (68) formed at the second side cowl (32) and overlapping the first attachment portion (54); and
a connector (80) that connects the first attachment portion (54) and the second attachment portion (68),
the first attachment portion (54) is formed at the back surface of the first side cowl (28), and
the second attachment portion (68) is provided on the back surface side of the first side cowl (28) through a communication hole (52) formed at the first side cowl (28).

13. The saddle riding type vehicle (10) according to claim 12, wherein the first side cowl (28) comprises an opening (57) opened under the first side cowl (28) in a position below and corresponding to the first attachment portion (54), and
the connector (80) is provided on the back surface side of the first side cowl (28) through the opening.

14. The saddle riding type vehicle (10) according to any one of claims 1 to 13, wherein the second side cowl (32) comprises a contact member (78) provided at the back surface of the second side cowl (32), and
the contact member (78) contacts the surface of the first side cowl (28) when the second side cowl (32) is attached to the first side cowl (28).

15. The saddle riding type vehicle (10) according to claim 14, wherein the contact member (78) comprises a contact portion (78B) that contacts the surface of the first side cowl (28), and
the contact portion is made of rubber.

## Patentansprüche

1. Ein Fahrzeug (10) vom Sattelreittyp, das folgende Merkmale aufweist:
einen Sitz (34);
eine erste Seitenverkleidung (28), die in einer Seitenansicht des Fahrzeugs (10) vor dem Sitz (34) vorgesehen ist; und
eine zweite Seitenverkleidung (32), die durch ein Anbringungsbauglied an einer Oberfläche der ersten Seitenverkleidung (28) angebracht ist,
wobei die zweite Seitenverkleidung (32) eine Mehrzahl von Anbringungszuständen aufweist,
wobei die Mehrzahl von Anbringungszuständen einen ersten Anbringungszustand und einen zweiten Anbringungszustand aufweist, in dem die zweite Seitenverkleidung (32) an der ersten Seitenverkleidung (28) hinter einer Position angebracht ist, die dem ersten Anbringungszustand entspricht,
wobei eine Länge eines hinteren Endes der zweiten Seitenverkleidung (32), die in der Fahrzeugbreiterichtung von der Oberfläche der ersten Seitenverkleidung (28) vorsteht, in dem zweiten Anbringungszustand größer ist als in dem ersten Anbringungszustand.

2. Das Fahrzeug (10) vom Sattelreittyp gemäß Anspruch 1, bei dem an der Oberfläche (28S) der ersten Seitenverkleidung (28) eine Ausnehmung (36) gebildet ist, und
die zweite Seitenverkleidung (32) in der Ausnehmung (36) vorgesehen ist.

3. Das Fahrzeug (10) vom Sattelreittyp gemäß Anspruch 1 oder 2, das ferner einen Kühler (82) aufweist, wobei die erste Seitenverkleidung (28) ein Lüftungsloch (36A) aufweist, das zwischen der vorderen und hinteren Oberflächenseite der ersten Seitenverkleidung (28) kommuniziert, und
der Kühler (82) in einer Seitenansicht des Fahrzeugs (10) vor dem Lüftungsloch (36A) positioniert ist.

4. Das Fahrzeug (10) vom Sattelreittyp gemäß Anspruch 3, bei dem in einer Seitenansicht des Fahrzeugs (10) die zweite Seitenverkleidung (32) einen Teil des Lüftungslochs (36A) bedeckt, und
ein Anteil des Lüftungslochs (36A), der durch die zweite Seitenverkleidung (32) bedeckt ist, zwischen der Mehrzahl von Anbringungszuständen unterschiedlich ist.

5. Das Fahrzeug (10) vom Sattelreittyp gemäß Anspruch 4, bei dem ein Anteil des Lüftungslochs (36A), der durch die zweite Seitenverkleidung (32) in einer Position bedeckt ist, die dem zweiten Anbringungszustand entspricht, kleiner ist als ein Anteil des Lüftungslochs (36A), der durch die zweite Seitenverkleidung (32) in einer Position bedeckt ist, die dem ersten Anbringungszustand entspricht.

6. Das Fahrzeug (10) vom Sattelreittyp gemäß einem der Ansprüche 3 bis 5, bei dem in einer Seitenansicht des Fahrzeugs (10) das Lüftungsloch (36A) vor der zweiten Seitenverkleidung (32) positioniert ist.

7. Das Fahrzeug (10) vom Sattelreittyp gemäß einem der Ansprüche 1 bis 6, bei dem das Anbringungsbauglied folgende Merkmale aufweist:
einen ersten Eingriffnahmeabschnitt (38), der an der Oberfläche der ersten Seitenverkleidung (28) gebildet ist; und
einen zweiten Eingriffnahmeabschnitt (58), der an einer hinteren Oberfläche der zweiten Seitenverkleidung (32) gebildet ist, um den ersten Eingriffnahmeabschnitt (38) in Eingriff zu nehmen.

8. Das Fahrzeug (10) vom Sattelreittyp gemäß Anspruch 7, bei dem der erste Eingriffnahmeabschnitt (38) ein Eingriffnahmeloch (40A, 40B) ist, das an der Oberfläche der ersten Seitenverkleidung (28) gebildet ist, und
der zweite Eingriffnahmeabschnitt (58) ein Eingriffnahmestück (62) ist, das eine Umfangskante des Eingriffnahmelochs (40A, 40B) in Eingriff nimmt.

9. Das Fahrzeug (10) vom Sattelreittyp gemäß Anspruch 8, bei dem an einer Innenumfangsoberfläche des Eingriffnahmelochs (40A, 40B) eine Begrenzungsoberfläche (42, 46) an einem hinteren Ende des Eingriffnahmelochs (40A, 40B) gebildet ist, um sich in einer Oben-Unten-Richtung des Fahrzeugs (10) zu erstrecken,
wobei das Eingriffnahmestück (62) folgende Merkmale aufweist:
einen ersten Kontaktabschnitt (64A), der die Begrenzungsoberfläche (42, 46) kontaktieren kann; und
einen zweiten Kontaktabschnitt (64B), der die hintere Oberfläche der zweiten Seitenverkleidung (32) kontaktieren kann, während der erste Kontaktabschnitt (64A) in Kontakt mit der Begrenzungsoberfläche (42, 46) ist.

10. Das Fahrzeug (10) vom Sattelreittyp gemäß Anspruch 9, bei dem die innere Umfangsoberfläche des Eingriffnahmelochs (40A, 40B) eine erste Führungsoberfläche (44A, 48A), die sich von einem unteren Ende der Begrenzungsoberfläche (42, 46) nach vorne erstreckt und durch den ersten Kontaktabschnitt (64A) kontaktiert werden kann, und
eine zweite Führungsoberfläche (44B, 48B) aufweist, die sich von einem vorderen Ende der ersten Führungsoberfläche (44A, 48A) nach vorne und schräg nach unten erstreckt und durch den ersten Kontaktabschnitt (64A) kontaktiert werden kann.

11. Das Fahrzeug (10) vom Sattelreittyp gemäß Anspruch 10, bei dem sich die erste Führungsoberfläche (44A, 48A) von dem unteren Ende der Begrenzungsoberfläche (42, 46) nach vorne und schräg nach oben erstreckt.

12. Das Fahrzeug (10) vom Sattelreittyp gemäß einem der Ansprüche 1 bis 11, bei dem das Anbringungsbauglied folgende Merkmale aufweist:
einen ersten Anbringungsabschnitt (54), der an der ersten Seitenverkleidung (28) gebildet ist;
einen zweiten Anbringungsabschnitt (68), der an der zweiten Seitenverkleidung (32) gebildet ist und den Anbringungsabschnitt (54) überlappt; und
einen Verbinder (80), der den ersten Anbringungsabschnitt (54) und den zweiten Anbringungsabschnitt (68) verbindet,
wobei der erste Anbringungsabschnitt (54) an der hinteren Oberfläche der ersten Seitenverkleidung (28) gebildet ist, und
der zweite Anbringungsabschnitt (68) auf der hinteren Oberflächenseite der ersten Seitenverkleidung (28) vorgesehen ist durch ein Kommunikationsloch (52), das an der ersten Seitenverkleidung (28) gebildet ist.

13. Das Fahrzeug (10) vom Sattelreittyp gemäß Anspruch 12, bei dem die erste Seitenverkleidung (28) eine Öffnung (57) aufweist, die unter der ersten Seitenverkleidung (28) geöffnet ist in einer Position unter dem und entsprechend dem ersten Anbringungsabschnitt (54), und
der Verbinder (80) auf der hinteren Oberflächenseite der ersten Seitenverkleidung (28) durch die Öffnung vorgesehen ist.

14. Das Fahrzeug (10) vom Sattelreittyp gemäß einem der Ansprüche 1 bis 13, bei dem die zweite Seitenverkleidung (32) ein Kontaktbauglied (78) aufweist, das an der hinteren Oberfläche der zweiten Seitenverkleidung (32) vorgesehen ist, und
das Kontaktbauglied (78) die Oberfläche der ersten Seitenverkleidung (28) kontaktiert, wenn die zweite Seitenverkleidung (32) an der ersten Seitenverkleidung (28) angebracht ist.

15. Das Fahrzeug (10) vom Sattelreittyp gemäß Anspruch 14, bei dem das Kontaktbauglied (78) einen Kontaktabschnitt (78B) aufweist, der die Oberfläche der ersten Seitenverkleidung (28) kontaktiert, und
der Kontaktabschnitt aus Gummi hergestellt ist.

## Revendications

1. Véhicule de type à selle (10), comprenant:
un siège (34);
un premier capot latéral (28) prévu en avant du siège (34) dans une vue de côté du véhicule (10); et
un deuxième capot latéral (32) fixé à une surface du premier capot latéral (28) par l'intermédiaire d'un élément de fixation,
le deuxième capot latéral (32) présentant une pluralité d'états de fixation, la pluralité d'états de fixation comprenant un premier état de fixation et un deuxième état de fixation, dans lequel le deuxième capot latéral (32) est fixé au premier capot latéral (28) en arrière d'une position correspondant au premier état de fixation,
une longueur d'une extrémité arrière du deuxième capot latéral (32) ressortant de la surface du premier capot latéral (28) dans le sens de la largeur du véhicule étant plus grande dans le deuxième état de fixation que dans le premier état de fixation.

2. Véhicule de type à selle (10) selon la revendication 1, dans lequel un évidement (36) est formé dans la surface (28S) du premier capot latéral (28), et
le deuxième capot latéral (32) est prévu dans l'évidement (36).

3. Véhicule de type à selle (10) selon la revendication 1 ou 2, comprenant par ailleurs un radiateur (82), dans lequel le premier capot latéral (28) présente un trou de ventilation (36A) qui communique entre les côtés des surfaces avant et arrière du premier capot latéral (28), et
le radiateur (82) est positionné en avant de l'orifice d'aération (36A) dans une vue de côté du véhicule (10).

4. Véhicule de type à selle (10) selon la revendication 3, dans lequel, dans une vue de côté du véhicule (10), le deuxième capot latéral (32) recouvre une partie de l'orifice de ventilation (36A), et
un rapport de l'orifice de ventilation (36A) recouvert par le deuxième capot latéral (32) est différent entre la pluralité d'états de fixation.

5. Véhicule de type à selle (10) selon la revendication 4, dans lequel le rapport de l'orifice de ventilation (36A) recouvert par le deuxième capot latéral (32) dans une position correspondant au deuxième état de fixation est plus petit qu'un rapport de l'orifice de ventilation (36A) recouvert par le deuxième capot latéral (32) dans une position correspondant au premier état de fixation.

6. Véhicule de type à selle (10) selon l'une quelconque des revendications 3 à 5, dans lequel, dans une vue de côté du véhicule (10), l'orifice de ventilation (36A) est positionné en avant du deuxième capot latéral (32).

7. Véhicule de type à selle (10) selon l'une quelconque des revendications 1 à 6, dans lequel l'élément de fixation comprend:
une première partie de venue en prise (38) formée dans la surface du premier capot latéral (28); et
une deuxième partie de venue en prise (58) formée dans une surface arrière du deuxième capot latéral (32), pour venir en prise avec la première partie de venue en prise (38).

8. Véhicule de type à selle (10) selon la revendication 7, dans lequel la première partie de venue en prise (38) est un trou de venue en prise (40A, 40B) formé dans la surface du premier capot latéral (28), et
la deuxième partie de venue en prise (58) est une pièce de venue en prise (62) qui vient en prise avec un bord périphérique du trou de venue en prise (40A, 40B).

9. Véhicule de type à selle (10) selon la revendication 8, dans lequel dans une surface périphérique intérieure du trou de venue en prise (40A, 40B) est formée une surface de limitation (42, 46) à une extrémité arrière du trou de venue en prise (40A, 40B), de manière à s'étendre dans une direction du haut vers le bas du véhicule (10),
la pièce de venue en prise (62) comprend:
une première partie de contact (64A) qui peut entrer en contact avec la surface de limitation (42, 46); et
une deuxième partie de contact (64B) qui peut entrer en contact avec la surface arrière du deuxième capot latéral (32), tandis que la première partie de contact (64A) est en contact avec la surface de limitation (42, 46).

10. Véhicule de type à selle (10) selon la revendication 9, dans lequel la surface périphérique intérieure du trou de venue en prise (40A, 40B) présente une première surface de guidage (44A, 48A) qui s'étend vers l'avant depuis une extrémité inférieure de la surface de limitation (42, 46) et avec laquelle peut entrer en contact la première partie de contact (64A), et
une deuxième surface de guidage (44B, 48B) qui s'étend vers l'avant et obliquement vers le bas depuis une extrémité avant de la première surface de guidage (44A, 48A) et avec laquelle peut entrer en contact la première partie de contact (64A).

11. Véhicule de type à selle (10) selon la revendication 10, dans lequel la première surface de guidage (44A, 48A) s'étend vers l'avant et obliquement vers le haut depuis l'extrémité inférieure de la surface de limitation (42, 46).

12. Véhicule de type à selle (10) selon l'une quelconque des revendications 1 à 11, dans lequel l'élément de fixation comprend:
une première partie de fixation (54) formée sur le premier capot latéral (28);
une deuxième partie de fixation (68) formée sur le deuxième capot latéral (32) et venant en recouvrement avec la première partie de fixation (54); et
un connecteur (80) qui connecte la première partie de fixation (54) et la deuxième partie de fixation (68),
la première partie de fixation (54) est formée dans la surface arrière du premier capot latéral (28), et
la deuxième partie de fixation (68) est prévue sur le côté de surface arrière du premier capot latéral (28) à travers un trou de communication (52) formé dans le premier capot latéral (28).

13. Véhicule de type à selle (10) selon la revendication 12, dans lequel le premier capot latéral (28) comprend une ouverture (57) ouverte sous le premier capot latéral (28) dans une position au-dessous de et correspondant à la première partie de fixation (54), et
le connecteur (80) est prévu du côté de la surface arrière du premier capot latéral (28) à travers l'ouverture.

14. Véhicule de type à selle (10) selon l'une quelconque des revendications 1 à 13, dans lequel le deuxième capot latéral (32) comprend un élément de contact (78) prévu sur la surface arrière du deuxième capot latéral (32), et
l'élément de contact (78) entre en contact avec la surface du premier capot latéral (28) lorsque le deuxième capot latéral (32) est fixé au premier capot latéral (28).

15. Véhicule de type à selle (10) selon la revendication 14, dans lequel l'élément de contact (78) comprend une partie de contact (78B) qui entre en contact avec la surface du premier capot latéral (28), et
la partie de contact est réalisée en caoutchouc.
